# EUROPÄISCHE PATENTSCHRIFT

(11) **EP 2 366 642 B1**
(45) Veröffentlichungstag und Bekanntmachung des Hinweises auf die Patenterteilung: **12.10.2016**
(21) Anmeldenummer: 11154767.5
(22) Anmeldetag: 17.02.2011
(51) Int. Cl.: B65G 47/53

(54) **Logistiksystem für eine Bogenverarbeitende Maschine**
Logistics system for a sheet processing machine
Système logistique pour une machine traitant des feuilles

(30) Priorität: 19.03.2010 DE 102010012105
(43) Veröffentlichungstag der Anmeldung: 21.09.2011
(73) Patentinhaber: Heidelberger Druckmaschinen AG, 69115 Heidelberg (DE)
(72) Erfinder: Müller, Andreas, 69120, Heidelberg (DE)

(56) Entgegenhaltungen:
- DE-A1-102006 002 356
- GB-A- 2 331 283
- JP-A- S60 118 520
- JP-A- 2011 006 166
- JP-U- H0 234 518

## Beschreibung

Die Erfindung betrifft ein Logistiksystem für eine Bogen verarbeitende Maschine, insbesondere Druckmaschine. Ein derartiges Logistiksystem weist Speicherbereiche für bereitzustellende Paletten oder Bogenstapel auf. Darüber hinaus sind Förderstrecken und Querschieber - sogenannte Eckumsetzer - vorgesehen, die einen Bogenstapel in eine 90° versetzt angeordnete Richtung umlenken können.

Ein derartiges Logistiksystem ist z. B. aus dem Gebrauchsmuster 20107827 U1 bekannt. Hierbei werden - sogenannte Transportpaletten - auf aus Rollenbahnen bestehenden Förderstrecken transportiert.

Rollenfördersysteme weisen jedoch den Nachteil auf, dass diese unflexibel in Bezug auf die zu verwendenden Paletten sind. Es lassen sich nur bestimmte Systempaletten mit stark ausgebildeten Kufen sicher fördern. Außerdem weisen diese einen über dem Niveau eines Hallenbodens liegenden Aufbau auf, so dass dieser nicht mit einem Transportwagen, z. B. für das Beliefern der Druckmaschine mit Farb- oder Lackgebinden überfahren werden kann.

Die gattungsgemäße JP S60 118520A zeigt ein Logistiksystem für Gegenstände, welche von unterschiedlichen Richtungen mittels Transportbändern einer Bearbeitungsstation zugeführt werden können. Unmittelbar vor der Bearbeitungsstation ist ein sogenannter Anpassungstisch zum Drehen der Gegenstände angeordnet.

Der Erfindung liegt daher die Aufgabe zugrunde ein Logistiksystem für eine Bogen verarbeitende Maschine zu schaffen, welches eine Vielzahl von Paletten fördern, umsetzen und speichern kann.

Die Erfindung wird erfindungsgemäß durch die Merkmale des Anspruchs 1 gelöst.

Es ist ein besonderer Vorteil der Erfindung, dass ebenerdig angeordnete Transportplatten eingesetzt werden können, die vorgesehene Transportbahnen ebenerdig abdecken, so dass diese z. B. von Transportwagen, Gabelstapler usw. mühelos überfahren werden können.

In vorteilhafter Weise können die Transportplatten jede Art von Paletten, z. B. auch Holzpaletten transportieren.

Besonders vorteilhaft ist die Anordnung eines Eckumsetzers im Bereich eines oder mehrerer Speicherplätze, oder auch eines winkelförmig angeordneten Transportbahnverlaufes, wobei der Eckumsetzer so ausgebildet ist, dass die Transportplatte stets auf einer Ebene gefördert wird.

Zur Höhenverstellung der Transportbänder des Eckumsetzers aus einer Warteposition in eine Betriebsposition ist eine verschiebbare Steuerkulisse vorgesehen, die mittels eines einzigen Stellelementes betätigbar ist.

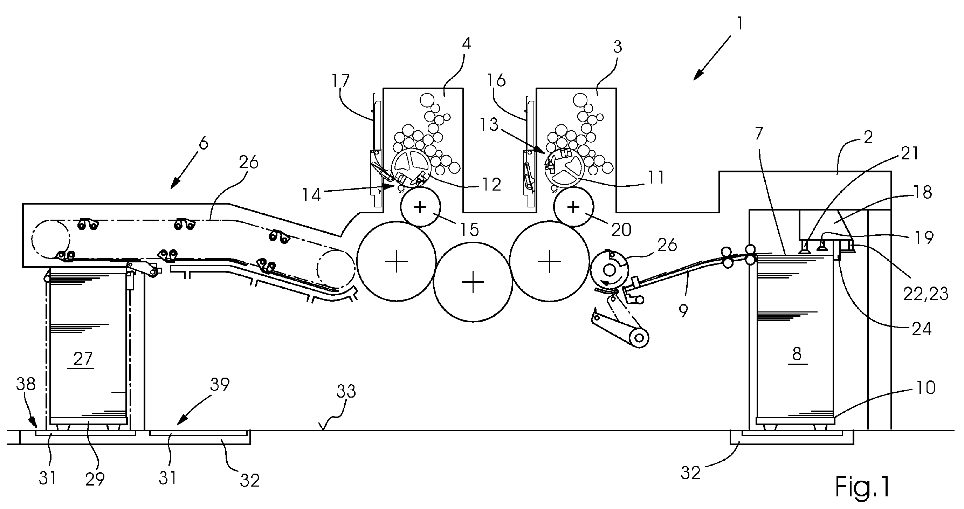

Ein Ausführungsbeispiel der Erfindung ist in den Zeichnungen dargestellt und wird im Folgenden beschrieben. Es zeigen
- Figur 1: eine Bogenrotationsdruckmaschine im Schnitt in schematischer Darstellung,
- Figur 2: eine Draufsicht auf einen Ausleger der Bogenrotationsdruckmaschine und ein erfindungsgemäßes Logistiksystem in schematischer Darstellung,
- Figur 3: einen Eckumsetzer in perspektivischer Ansicht,
- Figur 4: einen Schnitt durch den Eckumsetzer in einer ersten Arbeitsposition,
- Figur 5: einen Schnitt durch den Eckumsetzer in einer zweiten Arbeitsposition und
- Figur 6: einen Schnitt durch den Eckumsetzer in einer dritten Arbeitsposition.

Eine Bogen 7 verarbeitende Maschine, z. B. eine Druckmaschine 1, weist einen Anleger 2, mindestens ein Druckwerk 3 bzw. 4 und einen Ausleger 6 auf. Die Bogen 7 werden von einem Bogenstapel 8 entnommen und vereinzelt oder schuppenförmig über einen Zuführtisch 9 den Druckwerken 3 und 4 zugeführt. Diese enthalten in bekannter Weise jeweils einen Plattenzylinder 11, 12. Die Plattenzylinder 11 und 12 weisen jeweils eine Vorrichtung 13, 14 zum Befestigen flexibler Druckplatten auf. Darüber hinaus ist jedem Plattenzylinder 11, 12 eine Vorrichtung 16, 17 für den halb- oder vollautomatischen Druckplattenwechsel zugeordnet.

Der Bogenstapel 8 liegt auf einer gesteuert anhebbaren Stapelplatte 10 auf. Die Entnahme der Bogen 7 erfolgt von der Oberseite des Bogenstapels 8 mittels eines so genannten Saugkopfes 18, der unter anderem eine Anzahl von Hub- und Schleppsaugern 19, 21 für die Vereinzelung der Bogen 7 aufweist. Darüber hinaus sind Blaseinrichtungen 22 zur Auflockerung der oberen Bogenlagen und Tastelemente 23 zur Stapelnachführung vorgesehen. Zur Ausrichtung des Bogenstapels 8, insbesondere der oberen Bogen 7 des Bogenstapels 8 sind eine Anzahl von seitlichen und hinteren Anschlägen 24 vorgesehen.

Die Druckmaschine 1 weist ein Kettengreifersystem 26 zur Auslage von Bogen auf einen Auslegerstapel 27 auf.

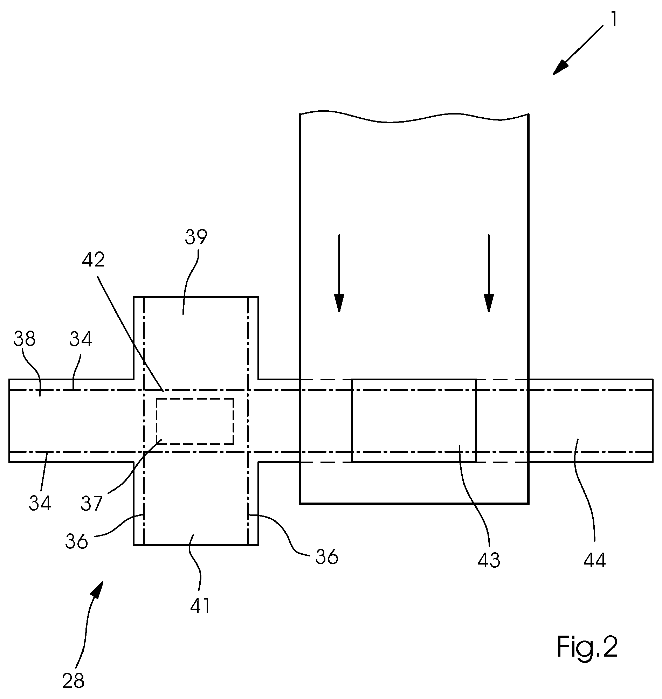

Figur 2 zeigt eine Draufsicht auf die Druckmaschine 1 mit einem Logistiksystem 28 zum Transport von Paletten 29 und Bogenstapeln 27 auf Transportplatten 31. Die Transportplatten 31 werden ebenerdig in Transportbahnen 32 geführt und mittels Kettensystemen 34, 36 angetrieben, so dass eine Oberseite der Transportplatten 31 dasselbe Höhenniveau aufweist, wie die Oberfläche eines Hallenbodens 33, auf welchem die Druckmaschine 1 steht.

Das Kettensystem 34 ist quer zur Bogentransportrichtung der Druckmaschine 1 angeordnet. Das zweite Kettensystem 36 ist rechtwinklig zum ersten Kettensystem 34 angeordnet und kreuzt dieses im Bereich eines Eckumsetzers 37. Der Eckumsetzer 37 ist dazu ausgebildet eine Transportrichtung der Transportplatten 31 zu ändern. Durch die Anordnung gemäß Figur 2 ist es möglich die Transportplatten 31 auf verschiedene Positionen zu verschieben. Die Positionen 38, 39, 41 sind Positionen für das Speichern bzw. für die Aufgabe oder Entnahme von Leerpaletten 29 oder Bogenstapeln 27. Auf der Position 42 ist der Eckumsetzer 37 angeordnet. An der Position 43 erfolgt die Aufnahme von Bogen der Bogen verarbeitenden Maschine 1 zur Bildung eines Bogenstapels 27. Die Position 44 dient als Warteposition für die Leerpalette 29. Selbstverständlich kann diese auf für die Entnahme von Bogenstapeln 27 benutzt werden.

Je nach Bedarf können weitere Speicherpositionen vorgesehen werden, wobei deren Anordnung unter dem Einsatz weiterer Eckumsetzer 37 beliebig ist. Selbstverständlich kann das Logistiksystem 28 auch einen Transportpfad zum Anleger 2 sowie zu nicht dargestellten Papierlagern aufweisen.

Eine Bestückung des Auslegers 6 mit einer neuen Leerpalette 29 und Speicherung von Bogenstapeln 27 auf den Entnahmepositionen 38, 39, 41 erfolgt bei dem Logistiksystem 28 gemäß Figur 2 folgendermaßen.

Die Position 38 des Logistiksystems 28 wird mit einer Leerpalette 29 bestückt und mittels des Kettensystems 34 auf die Warteposition 44 gefahren. Sobald der Bogenstapel 27 die vorgegebene Stapelhöhe erreicht hat, wird dieser im Bereich der Position 43 auf einer Transportplatte 31 des Logistiksystems 28 abgesetzt und auf die Position 38 verfahren. Weitere Bogenstapel 27 können auf den freien Speicherplätzen der Position 39, 41 zwischengelagert werden, bevor diese von einem Bediener entfernt werden müssen.

Der Eckumsetzer 37 weist einen Rahmen 46 auf, in welchem eine Antriebswelle 47 und eine Umlenkwelle 48 gelagert sind, die zwei parallel angeordnete endlos umlaufende Transportbänder oder Ketten 49 antreiben.

Ein zweiter Rahmen 51 ist innerhalb des Bauraumes des ersten Rahmens 46 angeordnet und weist ebenfalls eine im Rahmen 51 gelagerte Antriebswelle 52 und eine Umlenkwelle 53 auf, welche zwei parallel angeordnete endlos umlaufende Transportbänder oder Ketten 54 antreiben.

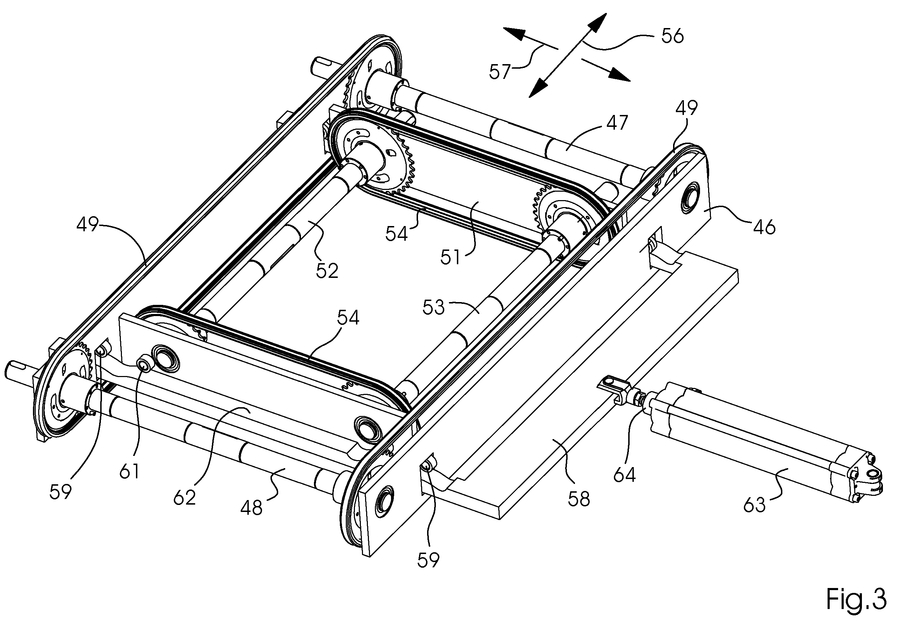

Die Antriebsrichtung 56 (Pfeil in Figur 3) der Fördermittel des ersten Rahmens 46 ist gegenüber der Antriebsrichtung 57 (Pfeil Figur 3) der Fördermittel des zweiten Rahmens 51 um 90° versetzt angeordnet.

Die Rahmen 46, 51 sind auf einem verschiebbar angeordneten Steuerelement 58, z. B. einer Schaltkulisse, mittels Kurvenrollen 59,61 gelagert. Die Schaltkulisse 58 ist gabelförmig ausgebildet und umfasst den zweiten Rahmen 51, während sie durch Öffnungen des ersten Rahmens 46 hindurchgreift.

Die Schaltkulisse 58 weist eine Steuerkontur 62 auf, die mit den Kurvenrollen 59 des ersten Rahmens 46 und den Kurvenrollen 51 des zweiten Rahmens in Kontakt steht. Ein stationär angeordneter Arbeitszylinder 63, z. B. Pneumatikzylinder, greift zur Höhenverstellung der Rahmen 46, 51 mit einer Kolbenstange 64 an der Schaltkulisse 58 an, um diese in bzw. gegen die Transportrichtung 57 zu verschieben.

Der Kontakt der Kurvenrollen 59, 61 mit der Steuerkontur 62 der Schaltkulisse 58 bewirkt beim Verschieben der Steuerkulisse 58 ein Anheben des ersten Rahmens 46 auf ein vorgegebenes Höhenniveau und ein Absenken des zweiten Rahmens 51 auf ein darunterliegendes Niveau in der Warteposition und umgekehrt.

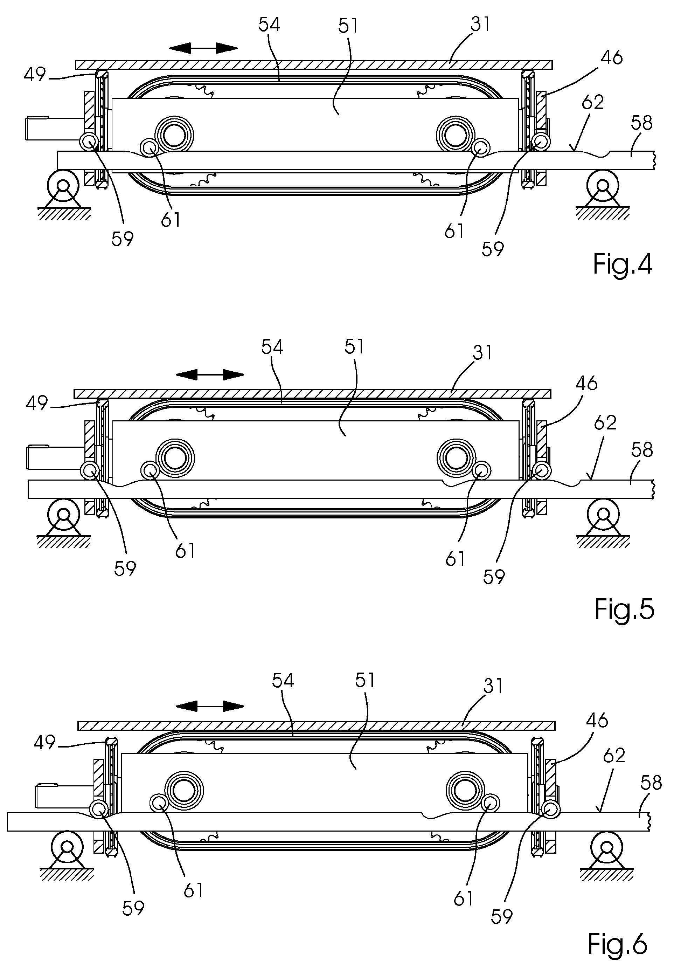

Eine mittels der Fördermittel des ersten Rahmens 46 geförderte Transportplatte 31 wird gemäß Figur 4 in der Position 42 gestoppt. Daraufhin wird die Schaltkulisse 58 betätigt, so dass die Fördermittel des zweiten Rahmens 51 auf das Höhenniveau der Fördermittel des ersten Rahmens 46 gemäß Figur 5 angehoben werden.

Durch ein weiteres Betätigen der Schaltkulisse 58 wird der erste Rahmen 46 gemäß Figur 6 abgesenkt. Durch Anfahren der Fördermittel des zweiten Rahmens 51 wird die Transportplatte 31 auf die Position 39 oder wahlweise 41 verschoben.

### Bezugszeichenliste

- 1: Druckmaschine
- 2: Anleger
- 3: Druckwerk
- 4: Druckwerk
- 5: ./.
- 6: Ausleger
- 7: Bogen
- 8: Bogenstapel
- 9: Zuführtisch
- 10: Stapelplatte
- 11: Plattenzylinder
- 12: Plattenzylinder
- 13: Druckplattenbefestigung
- 14: Druckplattenbefestigung
- 15: ./.
- 16: Druckplattenwechsler
- 17: Druckplattenwechsler
- 18: Saugkopf
- 19: Hubsauger
- 20: ./.
- 21: Schleppsauger
- 22: Blaseinrichtung
- 23: Tastelement
- 24: Anschlag
- 25: ./.
- 26: Kettengreifersystem
- 27: Auslegerstapel
- 28: Logistiksystem
- 29: Palette
- 30: ./.
- 31: Transportplatte
- 32: Transportbahn
- 33: Hallenboden
- 34: Kettensystem
- 35: ./.
- 36: Kettensystem
- 37: Eckumsetzer
- 38: Position
- 39: Position
- 40: ./.
- 41: Position
- 42: Position
- 43: Position
- 44: Position
- 45: ./.
- 46: erster Rahmen (37)
- 47: Antriebswelle
- 48: Umlenkwelle
- 49: Ketten / Transportbänder
- 50: ./.
- 51: zweiter Rahmen (37)
- 52: Antriebswelle
- 53: Umlenkwelle
- 54: Ketten / Transportbänder
- 55: ./.
- 56: Pfeil Antriebsrichtung (46)
- 57: Pfeil Antriebsrichtung (51)
- 58: Steuerelement
- 59: Kurvenrolle (46)
- 60: ./.
- 61: Kurvenrolle (51)
- 62: Steuerkontur (58)
- 63: Arbeitszylinder
- 64: Kolbenstange (63)

## Patentansprüche

1. Logistiksystem für eine Bogen verarbeitende Maschine, mit einer Transportbahn für Paletten und Bogenstapel, welche Speicherplätze zum Zwischenspeichern der Paletten und Bogenstapel sowie mindestens einen Eckumsetzer zum Ändern der Transportrichtung aufweist,
wobei der Eckumsetzer (37) zwei höhenverlagerbar angeordnete Fördermittel (49, 54) aufweist, welche rechtwinklig zueinander angeordnet sind,
wobei die Fördermittel (49; 54) jeweils in einem Rahmen (46, 51) gelagert sind, und die Rahmen (46, 51) jeweils mit einem Steuerelement (58) in Verbindung stehen, **dadurch gekennzeichnet,**
**dass** das Steuerelement (58) als horizontal verschiebbar gelagerte eine Steuerkontur (62) aufweisende Schaltkulisse ausgebildet ist.

2. Logistiksystem nach Anspruch 1,
**dadurch gekennzeichnet,**
**dass** das Logistiksystem (28) verschiebbare Transportplatten (31) aufweist, die die Transportbahnen (32) ebenerdig, auf dem Niveau eines Hallenbodens (33) abdecken.

3. Logistiksystem nach Anspruch 2,
**dadurch gekennzeichnet,**
**dass** zum Verschieben der Transportplatten (31) Kettensysteme (34, 36) vorgesehen sind.

4. Logistiksystem nach Anspruch 1,
**dadurch gekennzeichnet,**
**dass** die Fördermittel (49; 54) jeweils parallel angeordnete endlos umlaufende antreibbare Transportbänder oder Ketten sind.

5. Logistiksystem nach Anspruch 1,
dass die Steuerkontur (62) der Schaltkulisse (58) mit Anschlägen (59, 61) zusammenwirkt, welche an dem Rahmen (46, 51) angeordnet sind.

6. Logistiksystem nach Anspruch 5,
**dadurch gekennzeichnet,**
**dass** die Anschläge (59, 61) als drehbar gelagerte Kurvenrollen ausgebildet sind.

7. Logistiksystem nach Anspruch 6,
**dadurch gekennzeichnet,**
**dass** ein einziger stationär angeordneter Arbeitszylinder (63) zur Erzeugung der Horizontalbewegung des Steuerelementes (58) vorgesehen ist.

## Claims

1. Logistics system for a sheet-processing machine comprising a transport path for pallets and sheet stacks, the transport path having storage space for the intermediate storage of the pallets and sheet stacks and at least one corner deflector (37) for changing the direction of transport,
wherein the corner deflector (37) includes two conveying means (49, 54) disposed to be movable to different levels and disposed at right angles relative to one another, wherein each one of the conveying means (49; 54) is supported in a respective frame (46, 51) and wherein each one of the frames (46, 5 1) is connected to a respective control element (58),
**characterized in**
**that** the control element (58) is embodied as a selector gate disposed to be movable in a horizontal direction and including a control contour (62).

2. Logistics system according to claim 1,
**characterized in**
**that** the logistics system (28) includes movable transport plates (31) that cover the transport paths (32) at grade, even with the level of a shop floor (33).

3. Logistics system according to claim 2,
**characterized in**
**that** chain systems (34, 36) are provided to move the transport plates (31).

4. Logistics system according to claim 1,
**characterized in**
**that** the conveying means (49; 54) are endlessly revolving, drivable transport belts or chains respectively disposed to be parallel.

5. Logistics system according to claim 1,
**characterized in**
**that** the control contour (62) of the control cam (58) interacts with stops (59, 61) disposed on the frame (46, 51).

6. Logistics system according to claim 5,
**characterized in**
**that** the stops (59, 61) are embodied as cam followers supported for rotation.

7. Logistics system according to claim 6,
**characterized in**
**that** a single operating cylinder (63) that is disposed to be stationary is provided to generate the horizontal movement of the control element (58).

## Revendications

1. Système de logistique pour une machine de traitement de feuille, comprenant une bande de transport pour palettes et piles de feuilles qui présente des emplacements pour le stockage intermédiaire des palettes et des piles de feuilles ainsi qu'au moins un transfert à angle pour modifier la direction de transport,
le transfert à angle (37) présentant deux moyens de transport réglables en hauteur (49, 54) qui sont disposés en angle droit l'un par rapport à l'autre,
les moyens de transport (49 ; 54) étant logés respectivement dans un cadre (46, 51),
et
les cadres (49 ; 54) étant reliés respectivement à un élément de commande (58),
**caractérisé en ce**
**que** l'élément de commande (58) est réalisé comme une coulisse de commutation présentant une came de commande (62) logée coulissante horizontalement.

2. Système de logistique selon la revendication 1,
**caractérisé en ce**
**que** le système de logistique (28) présente des plaques de transport mobiles (31) qui recouvre les convoyeurs de transport (32) au niveau d'un sol de hall.

3. Système de logistique selon la revendication 2,
**caractérisé en ce**
**qu'**il est prévu des systèmes de chaîne (34, 36) pour le déplacement des plaques de transport (31).

4. Système de logistique selon la revendication 1,
**caractérisé en ce**
**que** les moyens de transport (49 ; 54) sont des convoyeurs de transport disposés parallèlement et entraînés sans fin à chaînes.

5. Système de logistique selon la revendication 1,
**caractérisé en ce**
**que** le contour de commande (62) de la coulisse de commutation (58) coopère avec des butées (59, 61) disposées sur le cadre (46, 51).

6. Système de logistique selon la revendication 5,
**caractérisé en ce**
**que** les butées (59, 61) sont réalisées comme des galets de came rotatifs.

7. Système de logistique selon la revendication 6,
**caractérisé en ce**
**qu'**un seul cylindre de travail stationnaire (63) est prévu pour le déplacement horizontal de l'élément de commande (58).
